# EUROPÄISCHE PATENTANMELDUNG

(11) **EP 3 334 025 A1**
(43) Veröffentlichungstag der Anmeldung: **13.06.2018**
(21) Anmeldenummer: 16202606.6
(22) Anmeldetag: 07.12.2016
(51) Int. Cl.: H02M 3/335

(54) **HILFSVERSORGUNG FÜR EIN SCHALTNETZTEIL**

(71) Anmelder: Siemens Aktiengesellschaft, 80333 München (DE)
(72) Erfinder: Reschenauer, Stefan, 2191 Atzelsdorf (AT); Dyszewski, Janusz, 1200 Wien (AT); Schulz, Stefan, 2152 Gnadendorf (AT)
(74) Vertreter: Maier, Daniel Oliver

(57) **Zusammenfassung**

Die Erfindung betrifft eine Hilfsversorgung (HV) für ein Schaltnetzteil, welches neben anderen Komponenten einen Transformator mit einer Primärseite (P) und einer Sekundärseite (S) umfasst. Dabei wird von der Hilfsversorgung (HV) eine von einem Betriebszustand des Schaltnetzteils unabhängige Spannungsversorgung (Uv) für auf der Sekundärseite (S) des Schaltnetzteils angeordnete Einheiten (EL, K) zur Verfügung gestellt. Die Hilfsversorgung (HV) weist dabei auf der Primärseite (P), welche der Primärseite (P) des Schaltnetzteils entspricht, einen Frequenzgenerator (FG) zum Erzeugen einer Wechselspannung mit vorgegebener Frequenz auf. Auf der Sekundärseite (S), welche der Sekundärseite (S) des Schaltnetzteils entspricht, weist die Hilfsversorgung (HV) eine Gleichrichtereinheit (GL) für einen sekundärseitigen Versorgungsstrom und/oder eine sekundärseitigen Versorgungsspannung (Uv) auf. Zwischen der Primärseite (P) und der Sekundärseite (S) ist eine galvanische Trennungseinheit (TE) vorgesehen, welche insbesondere zwei Kondensatoren (TC1, TC2) gebildet wird. Die erfindungsgemäße Hilfsversorgung (HV) weist idealerweise eine kompakte Bauform auf und sie kann kostengünstig weitgehend unter Verwendung von Standardkomponenten realisiert werden.

## Beschreibung

### Technisches Gebiet

Die gegenständliche Erfindung betrifft allgemein das Gebiet der Elektrotechnik, insbesondere den Bereich der Leistungselektronik sowie leistungselektronischer Schaltungen zur Stromversorgung. Im Speziellen bezieht sich die vorliegende Erfindung auf eine Hilfsversorgung für eine Stromversorgung bzw. ein Schaltnetzteil. Dabei umfasst das Schaltnetzteil zumindest einen Transformator mit einer Primärseite und einer Sekundärseite und es wird von der Hilfsversorgung eine vom jeweiligen Betriebszustand unabhängige Spannungsversorgung für die Sekundärseite zur Verfügung gestellt.

### Stand der Technik

Schaltnetzteile sind seit langem bekannt und werden heutzutage in vielen Bereichen verwendet, um einen Verbraucher an ein Stromnetz bzw. eine Stromquelle anzubinden und den Verbraucher mit einer meist konstanten und häufig vorgebbaren Spannung zu versorgen. Vom Schaltnetzteil wird eine meist unstabilisierte, aus der Stromquelle stammende Gleich- oder Wechselspannung in eine konstante Ausgangsspannung umgewandelt. Für die Umwandlung der von der Stromquelle stammenden Gleich- oder Wechselspannung werden üblicherweise Spannungswandler eingesetzt, welcher einen Leistungsübertrager bzw. einen Transformator umfasst. Als Spannungswandler können beispielsweise Flusswandler, Sperrwandler oder Resonanzwandler verwendet werden.

Die Energie bzw. Leistung wird dabei mit Hilfe des Transformators von einer Primärseite des Schaltnetzteils, welche an das Stromnetz oder die Stromquelle angebunden ist, auf eine Sekundärseite des Schaltnetzteils, an welcher die Ausgangsspannung zur Verfügung gestellt wird, übertragen. Dabei weisen die meisten Schaltnetzteile als getaktete Stromversorgungen die Eigenschaft auf, dass der von ihnen übertragene Momentanleistungswert direkt vom Taktverhältnis abhängt - d.h. vom Verhältnis einer Ein- und Ausschaltzeit der eingesetzten Schaltelemente, welche üblicherweise von einer Steuereinrichtung geschaltet werden. Daher werden von nahezu allen elektronischen Geräten wie Schaltnetzteilen interne Versorgungen - so genannte Hilfsversorgungen - verwendet, um die jeweiligen Steuereinrichtungen bzw. eine gesamte Ansteuerung versorgen zu können.

Da aufgrund von Kostendruck Stromversorgungen, insbesondere Schaltnetzteile, immer billiger produziert werden müssen, wird häufig bei den Hilfsversorgungen gespart. So werden beispielsweise Hilfsversorgungen auf der Sekundärseite des Schaltnetzteils eingespart, da sekundärseitig ohnehin die Ausgangsspannung des Schaltnetzteils zur Verfügung steht. Allerdings kann es insbesondere bei Schaltnetzteilen mit hohen Anforderungen hinsichtlich Wirkungsgrads, thermischer Belastung und Ausfallssicherheit zunehmend erforderlich sein, eine zusätzliche meist sekundärseitige Steuerelektronik vorzusehen, welche unabhängig von der momentan verfügbaren Ausgangsspannung des Schaltnetzteils mit Energie versorgt werden muss. Weiterhin wird für zukünftige Schaltnetzteile häufig gefordert, dass eine Anschlussmöglichkeit vorgesehen ist, bei welcher durch einen Kurzschluss an einer Signalklemme die Ausgangsspannung abgeschaltet wird. Auch in diesem Fall muss für eine Versorgung von Komponenten wie z.B. einer Steuerelektronik, einer Kontrollleuchte, etc. auf der Sekundärseite des Schaltnetzteils gesorgt werden. Allerdings können auf der Sekundärseite des Transformators befindliche Komponenten nur unter Verwendung aufwändiger Schaltungen weiter versorgt werden, wenn keine Ausgangsspannung des Schaltnetzteils mehr zur Verfügung steht - wie z.B. im Kurzschlussfall, bei Fernausschaltung bzw. im so genannten Standby-Modus.

So kann beispielsweise eine getrennte Hilfsversorgung mit einem eigenen Hilfstransformator bzw. Hilfswandler vorgesehen sein, welcher unabhängig vom Haupttransformator bzw. Hauptwandler des Schaltnetzteils arbeitet. D.h. die sekundärseitige Hilfsversorgung wird z.B. von einer primärseitig vorhandenen Hilfsversorgung mit Hilfe eines Hilfswandlers bzw. Hilfstransformator abgeleitet. Bei dieser Hilfsversorgung muss der eingesetzte Transformator allerdings die gleichen Sicherheitsabstände zwischen den Windungen der Wicklungen bzw. die gleichen Spannungsabstände zwischen Primär- und Sekundärseite aufweisen wie der Haupttransformator des Schaltnetzteils. Damit ist beispielsweise die Baugröße der Hilfsversorgung für die Sekundärseite bzw. die Baugröße des Hilfstransformators nicht von der zu übertragenden - meist eher geringen - Leistung abhängig, sondern von den Luft- und Kriechstrecken. Damit ergibt sich zwangsläufig eine relativ große Konstruktion mit entsprechendem Platzbedarf am Layout sowie damit verbundene hohe Kosten - für die Hilfsversorgung wie für das Schaltnetzteil.

Alternativ kann die Hilfsversorgung für die Sekundärseite des Schaltnetzteils z.B. auch mit Hilfe des im Schaltnetzteil eingesetzten Wandlers bzw. Transformators realisiert werden. Dazu ist beispielsweise am Transformator des Schaltnetzteils eine zweite Sekundärwicklung vorgesehen. Um im Kurzschlussfall bzw. wenn keine Ausgangsspannung am Schaltnetzteil sekundärseitig für eine Hilfsversorgung zur Verfügung gestellt wird (z.B. bei Fernausschaltung bzw. im Standby-Modus), wird die Ausgangsspannung intern mit einer Grundlast belastet. Durch diese üblicherweise minimale bzw. gesteuerte Grundlast kann auf der Sekundärseite noch Energie für die sekundärseitige Versorgung über die zweite Sekundärwicklung ausgekoppelt werden. D.h. der Transformator des Wandlers muss dazu permanent zumindest einen für die Versorgung der Sekundärseite notwendige Energie/Leistung liefern. Durch eine derartige Hilfsversorgung der Sekundärseite werden die Verluste wegen der notwendigen Grundlast erhöht. Weiterhin ist eine spezielle, gegebenenfalls kostenintensive Ansteuerung notwendig, um einerseits nicht zu viel Leistung durch die Grundlast zu vernichten und um andererseits noch genügend Leistung für die sekundärseitige Hilfsversorgung zur Verfügung zu stellen.

### Darstellung der Erfindung

Der Erfindung liegt daher die Aufgabe zugrunde, eine Hilfsversorgung der eingangs angeführten Art für ein Schaltnetzteil anzugeben, durch welche auf kostengünstige Weise und in kompakter Bauform eine Versorgung einer Sekundärseite des Schaltnetzteils auch ohne verfügbare Ausgangsspannung des Schaltnetzteils möglich ist.

Diese Aufgabe wird durch eine Hilfsversorgung der eingangs angegebenen Art mit den Merkmalen des unabhängigen Patentanspruchs gelöst. Vorteilhafte Ausführungsformen der vorliegenden Erfindung sind in den abhängigen Ansprüchen beschrieben.

Erfindungsgemäß erfolgt die Lösung der Aufgabe durch eine Hilfsversorgung für ein Schaltnetzteil, welches neben anderen Komponenten einen Transformator mit einer Primärseite und einer Sekundärseite umfasst. Dabei wird von der Hilfsversorgung eine von einem Betriebszustand des Schaltnetzteils unabhängige Spannungsversorgung auf der Sekundärseite des Schaltnetzteils angeordnete Einheiten zur Verfügung gestellt. Die Hilfsversorgung weist dabei auf der Primärseite, welche der Primärseite des Schaltnetzteils entspricht, einen Frequenzgenerator, insbesondere einen Hochfrequenzgenerator, zum Erzeugen einer Wechselspannung mit vorgegebener Frequenz auf. Auf der Sekundärseite, welche der Sekundärseite des Schaltnetzteils entspricht, weist die Hilfsversorgung eine Gleichrichtereinheit für einen sekundärseitigen Versorgungsstrom und/oder eine sekundärseitigen Versorgungsspannung auf. Zwischen der Primärseite und der Sekundärseite ist eine galvanische Trennungseinheit vorgesehen.

Der Hauptaspekt der erfindungsgemäß vorgeschlagenen Lösung besteht darin, eine Hilfsversorgung für die Sekundärseite des Schaltnetzteils zu generieren und die galvanische Trennungseinheit mit einer Wechselspannung mit vorgegebener Frequenz zu beaufschlagen. Diese Wechselspannung wird vom primärseitig angeordneten Frequenzgenerator erzeugt und kann beispielsweise recheck-, dreieck- oder sinusförmig sein. Dadurch wird über die Trennungseinheit eine Wechselspannung bzw. eine Wechselstrom von der Primär- auf die Sekundärseite des Schaltnetzteils übertragen. Diese Wechselspannung bzw. dieser Wechselstrom kann dann mittels der sekundärseitig angeordneten Gleichrichtereinheit abgegriffen werden und für eine Versorgung von sekundärseitig angeordneten Einheiten wie z.B. Steuerelektronik, Kontrollleuchten, etc. herangezogen werden. Für eine Realisierung der erfindungsgemäßen Hilfsversorgung können idealerweise weitgehend Standard-Komponenten und/oder Standardbauteile verwendet werden, wodurch die Hilfsversorgung bzw. das entsprechende Schaltnetzteil relativ kostengünstig herstellbar ist. Weiterhin kann die Hilfsversorgung bzw. das entsprechende Schaltnetzteil in kompakter Bauform realisiert werden.

Eine bevorzugte Weiterbildung der erfindungsgemäßen Hilfsversorgung sieht vor, dass auf der Primärseite Vorwiderstände zwischen dem Frequenzgenerator und der galvanischen Trennungseinheit angeordnet sind. Es kann dabei beispielsweise in jeder Verbindung zwischen dem Frequenzgenerator und der galvanischen Trennungseinheit je ein Vorwiderstand angebracht sein. Durch den Einsatz der Vorwiderstände kann die Hilfsversorgung zusätzlich für eine Übertragung von Informationen von der Sekundärseite auf die Primärseite des Schaltnetzteils genutzt werden. Mittels der Vorwiderstände kann die galvanische Trennungseinheit angesteuert werden. Wird nun der sekundärseitig Ausgang der Hilfsversorgung belastet, so ändert sich die sekundäre Versorgungsspannung am Ausgang der Hilfsversorgung. Dies hat auch Auswirkungen auf die Wechselspannung auf der Primärseite - z.B. am Eingang der galvanischen Trennungseinheit. Durch die Veränderung der Wechselspannung primärseitig kann eine Veränderung der sekundären Versorgungsspannung festgestellt und entsprechend ausgewertet werden.

Für eine Auswertung der sekundären Versorgungsspannung bzw. einer Veränderung der sekundären Versorgungsspannung ist in vorteilhafter Weise eine Auswerteeinheit vorgesehen, welche primärseitig angeordnet ist. Die Auswerteeinheit zieht für die Auswertung die Veränderung der primärseitigen Wechselspannung heran und kann daraus bei bekannten primärseitigen Vorwiderständen einen Widerstand am Ausgang der Hilfsversorgung ableiten. Die Auswertung der primärseitigen Wechselspannung sowie ein Ableiten des Widerstands am Ausgang der Hilfsversorgung können analog oder digital erfolgen. Ein jeweiliges Auswerteergebnis kann dann entsprechend weiterverarbeitet werden. Auf diese einfache Weise kann durch ein passives Signal auf der Sekundärseite - wie z.B. einem Öffnen und Schließen eines Kontaktes, welcher am Ausgang der erfindungsgemäßen Hilfsversorgung angeordnet ist, oder durch eine Veränderung eines Widerstands am Ausgang der erfindungsgemäßen Hilfsversorgung - eine Information auf die Primärseite übertragen werden. Der Kontakt für das sekundärseitige Signal am Ausgang der Hilfsversorgung ist potentialfrei und kann beispielsweise auf das Massepotential oder ein anderes Potential gelegt werden. Durch die Gleichrichtereinheit ist es so auch möglich den Kurzschlusskontakt über eine längere Distanz bzw. über eine längere Leitung zu realisieren, da nur Gleichstrom geschaltet werden muss.

Weiterhin ist es vorteilhaft, wenn die Frequenz der Wechselspannung, welche vom Frequenzgenerator erzeugt wird, derart einstellbar ist, dass die galvanische Trennungseinheit ein Impedanzminimum aufweist. Dadurch wird insbesondere die Auswertung der sekundärseitigen Versorgungsspannung durch die primärseitige Auswerteeinheit bzw. ein Ableiten des Widerstands am Ausgang der Hilfsversorgung möglichst geringfügig beeinflusst. Idealerweise wird eine Wechselspannung mit einer hohen Frequenz generiert - z.B. in einem Bereich von 100kHz bis 1MHz.

Eine bevorzugte Fortbildung der erfindungsgemäßen Hilfsversorgung sieht vor, dass die galvanische Trennungseinheit durch zwei Kondensatoren realisiert ist, welche über die Gleichrichtereinheit auf der Sekundärseite in Serie geschaltet sind. Die Energie wird damit von der Primärseite auf die Sekundärseite kapazitiv übertragen. Weiterhin bietet der Einsatz vor Kondensatoren den Vorteil, dass Standardbauteile eingesetzt werden können und die Hilfsversorgung in kompakter Bauform und kostengünstig realisierbar ist. Aus Sicherheitsgründen sind die Kondensatoren, mit welchen die galvanische Trennungseinheit realisiert ist, als so genannte Y1-Kondensatoren ausgeführt.

Alternativ kann die galvanische Trennungseinheit auch als Transformator ausgeführt sein, wobei allerdings ein Spannungsabstand zwischen Primär- und Sekundärseite zu beachten ist.

### Kurzbeschreibung der Zeichnung

Die Erfindung wird nachfolgend in beispielhafter Weise anhand der beigefügten Figuren erläutert. Es zeigen dabei:
- Figur 1: schematisch und beispielhaft eine einfache Ausführung der erfindungsgemäßen Hilfsversorgung für eine Sekundärseite eines Schaltnetzteils
- Figur 2: beispielhaft eine Ausführungsvariante der erfindungsgemäßen Hilfsversorgung mit einer kapazitiven, galvanischen Trennungseinheit, welche auch zum Auswerten einer sekundärseitigen Versorgungsspannung einsetzbar ist.

### Ausführung der Erfindung

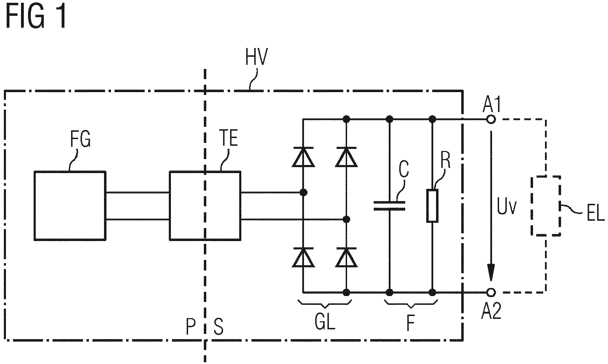

Figur 1 zeigt schematisch eine beispielhafte Ausführungsform einer Hilfsversorgung HV in der einfachsten Variante. Die erfindungsgemäße Hilfsversorgung HV wird in einem Schaltnetzteil eingesetzt, wobei aus Gründen der besseren Übersichtlichkeit das Schaltnetzteil in der Figur 1 nicht dargestellt ist. Das Schaltnetzteil umfasst zumindest einen Transformator oder einen Wandler, welcher einen Transformator umfasst, um eine galvanische Trennung zwischen einer Primärseite P und einer Sekundärseite S herzustellen. Dabei befindet sich auf der Primärseite P des Schaltnetzteils üblicherweise einen Anbindung an eine Stromquelle oder ein Stromnetz. An der Sekundärseite S des Schaltnetzteils wird eine Ausgangsspannung zum Anschließen einer Last bzw. eines Verbrauchers geliefert.

Für eine vom Betriebszustand des Schaltnetzteils unabhängige Versorgung von auf der Sekundärseite (S) des Schaltnetzteils angeordneten Einheiten EL wie z.B. einer sekundärseitigen Steuerelektronik, einer Kontrollleuchte, einer Anzeige, etc. ist eine Hilfsversorgung HV vorgesehen. Von der Hilfsversorgung HV werden sekundärseitig ein Versorgungsstrom und/oder eine Versorgungsspannung Uv für diese Einheiten EL zur Verfügung gestellt.

Die erfindungsgemäße Hilfsversorgung HV weist dazu auf einer Primärseite P, welche der Primärseite P des Schaltnetzteils entspricht - d.h. diese Seite der Hilfsversorgung ist an die jeweilige Stromquelle bzw. an das Stromnetz angebunden ist, einen Frequenzgenerator FG auf, welcher insbesondere als Hochfrequenzgenerator ausgeführt sein kann, um eine Wechselspannung im hohen kHz- bzw. MHz-Bereich zu generieren. Vom Frequenzgenerator FG wird eine Wechselspannung mit vorgegebener Frequenz generiert. Die Wechselspannung kann dabei rechtecks-, dreiecks- oder sinusförmig sein. Die Frequenz des Frequenzgenerators FG ist derart einstellbar, dass eine galvanische Trenneinheit TE, welche mit dem Frequenzgenerator FG verbunden ist, ein Impedanzminimum aufweist.

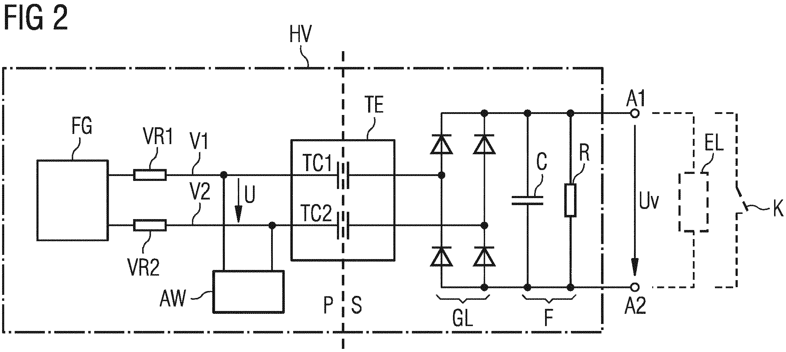

Die mit dem Frequenzgenerator FG verbundene, galvanische Trenneinheit TE trennt die Primärseite P der Hilfsversorgung HV von einer Sekundärseite S der Hilfsversorgung HV, welche der Sekundärseite bzw. der Ausgangsseite des Schaltnetzteils entspricht. Die galvanische Trenneinheit TE kann - wie später anhand von Figur 2 erläutert - durch zwei Kondensatoren TC1, TC2 realisiert sein. Alternativ kann die galvanische Trenneinheit TE als Transformator ausgeführt sein.

Sekundärseitig ist die galvanische Trenneinheit TE mit einer Gleichrichtereinheit GL - beispielsweise bestehend auf vier Dioden - verbunden. Mit Hilfe der Gleichrichtereinheit GL wird sekundärseitig ein Versorgungsstrom bzw. eine Versorgungsspannung Uv für sekundärseitige Einrichtungen EL des Schaltnetzteils zur Verfügung gestellt. Die Versorgungsspannung Uv kann beispielsweise auf der Sekundärseite S des Schaltnetzteils bzw. der Hilfsversorgung HV am Ausgang der Gleichrichtereinheit GL beispielsweise an Anschlüssen A1, A2 abgegriffen werden. D.h. an diese Anschlüsse A1, A2 ist eine sekundärseitige Einrichtung EL wie z.B. eine Steuerlogik, eine Kontrollleuchte, etc. anschließbar. Die Anschlüsse A1, A2 sind dabei potentialfrei - d.h. sie können auf ein beliebiges Potential oder das Massepotential gelegt werden. Die an den Anschlüssen A1, A2 abgreifbare Versorgungsspannung Uv ist vom jeweiligen Betriebszustand des Schaltnetzteils unabhängig.

Optional kann auf der Sekundärseite S der Hilfsversorgung HV noch eine Filterung F vorgesehen sein, welche z.B. aus einem Kondensator C und einem Widerstand R besteht. Die Filterung F ist dabei ausgangsseitig an die Gleichrichtereinheit GL angebracht, um beispielsweise die mittels der Gleichrichtereinheit GL erzeugte Versorgungsspannung Uv zu glätten.

In Figur 2 ist eine spezielle, besonders bevorzugte Ausführungsvariante der erfindungsgemäßen Hilfsversorgung HV für ein Schaltnetzteil dargestellt. Mit der in Figur 2 beispielhaft und schematisch dargestellten Hilfsversorgung HV kann neben einer vom Betriebszustand des Schaltnetzteils unabhängigen Versorgung von sekundärseitigen Einrichtungen EL auch die sekundärseitige Versorgungsspannung Uv bzw. eine sekundärseitige Belastung am Ausgang A1, A2 der Hilfsversorgung HV ausgewertet werden.

Die Hilfsversorgung HV weist dazu primärseitig den Frequenzgenerator FG zum Erzeugen einer Wechselspannung mit vorgegebener Frequenz auf. Sekundärseitig ist wieder die Gleichrichtereinheit GL - beispielsweise bestehend aus vier Dioden - vorgesehen, von welcher am Ausgang A1, A2 ein Versorgungsstrom bzw. eine Versorgungsspannung Uv für sekundärseitige Einrichtungen EL des Schaltnetzteils zur Verfügung gestellt wird. Alternativ kann am Ausgang A1, A2 ein Kontakt K vorgesehen sein, über welchen der Ausgang A1, A2 der Hilfsversorgung HV bzw. der Gleichrichtereinheit GL kurzschließbar ist. Weiterhin kann auf der Sekundärseite S am Ausgang der Gleichrichtereinheit GL optional die Filterung F - bestehend aus dem Kondensator C und dem Widerstand R - angebracht sein.

Für eine Trennung von Primärseite P und Sekundärseite S umfasst die Hilfsversorgung HV gemäß Figur 2 ebenfalls die Trenneinheit TE. Diese Trenneinheit TE ist beispielsweise durch zwei Kondensatoren TC1, TC2 realisiert, wobei die beiden Kondensatoren TC1, TC2 über die sekundärseitige Gleichrichtereinheit GL in Serie geschaltet sind. Aus Sicherheitsgründen bzw. damit beispielsweise der Kontakt K von einem Nutzer sicher geöffnet bzw. geschlossen werden kann, sind die Kondensatoren TC1, TC2 der Trenneinheit TE beispielsweise als so genannte Y1-Kondensatoren ausgeführt. So weisen Y1-Kondensatoren (beispielsweise nach der entsprechenden IEC-Norm) eine verstärkte Isolierung bzw. eine überprüfbare erhöhte elektrische und mechanische Sicherheit auf und dürfen daher zwischen der Primärseite P, welche mit einer Stromquelle oder dem Stromnetz verbunden ist, und der Sekundärseite S eingesetzt werden. Alternativ kann die Trenneinheit TE als Transformator ausgeführt sein.

Für die Auswertung der sekundärseitigen Versorgungsspannung Uv bzw. der sekundärseitigen Belastung am Ausgang A1, A2 der Hilfsversorgung sind weiterhin auf der Primärseite P zumindest zwei Vorwiderstände VR1, VR2 vorgesehen. Die Vorwiderstände VR1, VR2 sind zwischen dem Frequenzgenerator FG und der Trenneinheit TE angebracht. Ist die Trenneinheit TE - wie in Figur 2 dargestellt - durch zwei Kondensatoren TC1, TC2 realisiert, so ist ein erster Vorwiderstand VR1 in einer ersten Verbindung V1 zwischen dem Frequenzgenerator FG und einem ersten Kondensator TC1 der Trenneinheit TE und ein zweiter Vorwiderstand VR2 in einer zweiten Verbindung V2 zwischen dem Frequenzgenerator FG und einem zweiten Kondensator TC2 der Trenneinheit TE angeordnet. Weiterhin umfasst die Hilfsversorgung HV auf der Primärseite P eine Auswerteeinheit AW, welche an die Verbindungen V1, V2 angebunden ist.
Um auf der Sekundärseite S einen Versorgungsstrom bzw. eine Versorgungsspannung Uv zu generieren, wird vom Frequenzgenerator FG eine Wechselspannung mit einer vorgegebenen Frequenz erzeugt und die Trenneinheit TE bzw. die beiden Kondensatoren TC1, TC2 mit dieser Wechselspannung beaufschlagt. Die vorgegebene Frequenz der Wechselspannung ist dabei so gewählt, dass die Impedanz der Trenneinheit TE bzw. der beiden Kondensatoren TC1, TC2 ein Minimum aufweist. Üblicherweise wird eine Wechselspannung mit hoher Frequenz (z.B. 100kHz, 1MHz, etc.) generiert.

Durch die primärseitige Beaufschlagung der Trenneinheit TE wird ein Wechselstrom bzw. eine Wechselspannung durch die Trenneinheit TE auf die Sekundärseite S übertragen. Bei einer Trenneinheit TE, welche aus zwei Kondensatoren TC1, TC2 besteht, fließt beispielsweise ein Wechselstrom durch die Kondensatoren TC1, TC2, welcher sekundärseitig mittels der Gleichrichtereinheit GL abgegriffen werden kann.

Für die Auswertung der Versorgungsspannung Uv bzw. der Belastung am Ausgang A1, A2 der Hilfsversorgung HV wird die Trenneinheit TE bzw. werden die beiden Kondensatoren TC1, TC2 der Trenneinheit TE über die Vorwiderstände VR1, VR2 entsprechend angesteuert. Wird der Ausgang A1, A2 der Hilfsversorgung HV bzw. der Gleichrichtereinheit GL nun z.B. mit einer Einrichtung EL belastet oder über einen Kontakt K kurzgeschlossen, so bricht auch auf der Primärseite die Wechselspannung U entsprechend zusammen. Diese Veränderung der Wechselspannung U kann mittels der Auswerteeinheit AW detektiert und ausgewertet werden. Die Auswertung der primärseitigen Wechselspannung U sowie ein Ableiten der Belastung bzw. eines Widerstands am Ausgang A1, A2 der Hilfsversorgung HV können entweder analog oder digital erfolgen. Die mit der Auswerteeinheit AW ermittelten Ergebnisse können dann entsprechend weiterverarbeitet werden. Auf diese Weise kann ein passives Signal auf der Sekundärseite S - wie z.B. ein Öffnen und/oder Schließen des Kontakts K am Ausgang A1, A2 der Hilfsversorgung HV oder eine Veränderung des Widerstands EL am Ausgang A1, A2 der Hilfsversorgung HV - als Information auf die Primärseite P der Hilfsversorgung übertragen werden.

Bei Verwendung eines Kontakts K für ein sekundärseitiges Signal am Ausgang A1, A2 der Hilfsversorgung HV ist dieser Kontakt K potentialfrei und kann beispielsweise auf das Massepotential oder ein anderes Potential gelegt werden. Die von der Sekundärseite S auf die Primärseite P übertragene Information (z.B. Öffnen und/oder Schließen des Kontakts K) kann beispielsweise zum Ein- und Ausschalten des Schaltnetzteils genutzt werden.

Wird z.B. alternativ eine Veränderung der Spannung Uv bzw. des Belastungswiderstandes EL am Ausgang A1, A2 der Hilfsversorgung HV ausgewertet, so kann der Ausgang A1, A2 der Hilfsversorgung beispielsweise für die Realisierung einer Anzeige eines Füllstands genutzt werden.

## Patentansprüche

1. Hilfsversorgung (HV) für ein Schaltnetzteil, wobei das Schaltnetzteil zumindest einen Transformator mit einer Primärseite (P) und einer Sekundärseite (S) umfasst, und wobei die Hilfsversorgung (HV) eine von einem Betriebszustand des Schaltnetzteils unabhängige Spannungsversorgung (Uv) auf der Sekundärseite (S) des Schaltnetzteils angeordnete Einheiten (EL, K) zur Verfügung stellt, ***dadurch gekennzeichnet, dass*** die Hilfsversorgung (HV)
- primärseitig einen Frequenzgenerator (FG), insbesondere einen Hochfrequenzgenerator, zum Erzeugen einer Wechselspannung mit vorgegebener Frequenz und
- sekundärseitig eine Gleichrichtereinheit (GL) für einen sekundärseitigen Versorgungsstrom und/oder eine sekundärseitigen Versorgungsspannung (Uv) aufweist, und dass
- zwischen der Primärseite (P) und der Sekundärseite (S) eine galvanische Trennungseinheit (TE) vorgesehen ist.

2. Hilfsversorgung nach Anspruch 1, ***dadurch gekennzeichnet, dass*** weiterhin primärseitig Vorwiderstände (VR1, VR2) zwischen Frequenzgenerator (FG) und der galvanischen Trennungseinheit (TE) angebracht sind.

3. Hilfsversorgung nach einem der Ansprüche 1 bis 2, ***dadurch gekennzeichnet, dass*** die Hilfsversorgung (HV) weiterhin primärseitig eine Auswerteeinheit (AW) zum Auswerten der sekundärseitigen Versorgungsspannung (Uv) aufweist.

4. Hilfsversorgung nach einem der Ansprüche 1 bis 3, ***dadurch gekennzeichnet, dass*** die Frequenz der vom Frequenzgenerator (FG) erzeugten Wechselspannung derart einstellbar ist, dass die galvanische Trennungseinheit (TE) ein Impedanzminimum aufweist.

5. Hilfsversorgung nach einem der Ansprüche 1 bis 4, ***dadurch gekennzeichnet, dass*** die galvanische Trennungseinheit (TE) durch zwei Kondensatoren (TC1, TC2) realisiert ist, welche über die sekundärseitigen Gleichrichtereinheit (GL) in Serie geschaltet sind.

6. Hilfsversorgung nach Anspruch 5, ***dadurch gekennzeichnet, dass*** die Kondensatoren (TC1, TC2) der galvanischen Trennungseinheit (TE) als so genannte Y1-Kondensatoren ausgeführt sind.

7. Hilfsversorgung nach einem der Ansprüche 1 bis 4, ***dadurch gekennzeichnet, dass*** die galvanische Trennungseinheit (TE) als Transformator ausgeführt ist.
